Europäisches Patentamt

European Patent Office

Office européen des brevets

(19)

(11) Veröffentlichungsnummer: **0 272 383**
**B1**

(12)     EUROPÄISCHE  PATENTSCHRIFT

(45) Veröffentlichungstag der Patentschrift:
31.01.90

(21) Anmeldenummer: 87113666.9

(22) Anmeldetag: 18.09.87

(51) Int. Cl.⁴: **B29C 43/20**
// B29K105:08, B29K21:00,
B29K101:10

(54) Verfahren zur Herstellung von Verbundteilen.

(30) Priorität: **13.12.86 DE 3642637**

(43) Veröffentlichungstag der Anmeldung:
**29.06.88 Patentblatt 88/26**

(45) Bekanntmachung des Hinweises auf die Patenterteilung:
**31.01.90 Patentblatt 90/5**

(84) Benannte Vertragsstaaten:
**AT BE CH DE ES FR GB GR IT LI LU NL SE**

(56) Entgegenhaltungen:
**AT-A- 308 398**
**LU-A- 68 961**
**US-A- 4 361 457**
**US-A- 4 603 181**

**PATENT ABSTRACTS OF JAPAN, Band 8,**
**Nr. 57 (M-283)[1494], 15. März 1984; &**
**JP-A-58 208 033 (SANWA KAKOU K.K.) 03-12-1983**

(73) Patentinhaber: **RÜTGERSWERKE**
**AKTIENGESELLSCHAFT, Mainzer Landstrasse 217,**
**D-6000 Frankfurt am Main 1(DE)**

(72) Erfinder: **Kupper, Siegfried, Albstrasse 2,**
**D-7317 Wendlingen(DE)**
Erfinder: **Meinert, Hans Dieter, Grienweg 7,**
**D-7740 Nürtingen 10(DE)**

## Beschreibung

Die Erfindung betrifft ein neues Verfahren zur Herstellung von Verbundteilen, aus duroplastischem und gummielastischem Material durch Heiß-Verpressen.

Entsprechende Formteile finden vielfach Verwendung in der Automobil-, Flugzeug- oder Schiffsbauindustrie als Geräuschkapseln, Verkleidungen oder Abdeckungen von Maschinenteilen oder als Motorhauben.

Dabei ist aber die Abkapselung- oder Abdichtungsfunktion nicht vollständig gewährleistet, denn zum Ausgleich von Vibrations- oder sonstigen Erschütterungsbewegungen darf das duroplastische Formteil nicht vollkantig aufliegen, sondern muß zum jeweiligen benachbarten Bauteil einen gewissen Abstand haben.

Eine vollständige Abkapselungs- oder Abdichtungsfunktion ist aber gegeben, wenn das Formteil an den relevanten Kantenzonen eine Lippe aus einem gummielastischem Material hat. Bei einem derartigen Verbundteil übernimmt das Formteil aus duroplastischem Material die Trägerfunktion und die Lippe aus gummielastischem Material die Ausgleichs- und Dichtungsfunktion.

Gummielastische Lippen können an Formteile aus duroplastischem Material geklebt werden. Dies ist allerdings ein aufwendiger Vorgang, der die Herstellung entsprechender Verbundteile für eine Serienfertigung wirtschaftlich unrentabel gestaltet.

Es ist daher Aufgabe der Erfindung, ein Verfahren zur Herstellung von Verbundteilen aus Formteilen aus duroplastischem und gummielastischem Material durch Heiß-Verpressen bereitzustellen, bei dem diese Verbundteile in möglichst einem Arbeitsgang in wirtschaftlicher Weise gefertigt werden.

Die Lösung der Aufgabe erfolgt durch ein Verfahren gemäß der Ansprüche 1 bis 9.

Es wurde gefunden, daß sich die erfindungsgemäßen Verbundteile in einem Arbeitsgang herstellen lassen, wenn eine Formmasse auf der Basis einer unvernetzten Reaktionsharzmasse mit einer Masse aus unvernetztem gummielastischem Material in einem formgebenden Werkzeug in der Wärme so verpreßt werden, daß sie während des Preßvorgangs zusammenfließen und chemisch vernetzen.

Durch die gemeinsame Verpressung und die parallel ablaufende Vernetzung der beiden unterschiedlichen Materialien bildet sich überraschenderweise ein enger Verbund zwischen dem geformten duroplastischen Teil und dem geformten gummielastischen Material, das heißt, es entsteht ein Verbundteil aus einem duroplastischen und einem gummielastischen Formteil.

Die Verbindung von duroplastischem und gummielastischem Material durch Heiß-Verpressen ist bekannt. So werden gemäß AT–A 308 398 Gießharz-Formkörper und gemäß US–A 4 603 181 durch Heiß-Pressen hergestellte Formkörper aus duroplastischem Material mit speziellen Kautschuk-Mischungen durch Heiß-Verpressen beschichtet. Dabei muß aber jeweils der Formkörper aus duroplastischem Material in einem vorhergehenden Arbeitsgang geformt und im wesentlichen gehärtet werden.

Die Verpressung erfolgt beim erfindungsgemäßen Verfahren in einem heizbaren Stahlwerkzeug bei einer Temperatur im Bereich von 120 und 180°C bei einem Preßdruck im Bereich von 15 bis 100 bar, bevorzugt bei 50 bis 60 bar. Die Preßzeit beträgt, in Abhängigkeit von der Temperatur und der Reaktivität der eingesetzten Halbzeuge, 20 bis 180 s/mm Dicke des Form- oder Verbundteils. Übliche Formteile mit einer Dicke von 2 mm werden bevorzugt 40 bis 60 s lang gepreßt. Danach ist die Vernetzung des duroplastischen Materials meist beendet und die Vernetzung des gummielastischen Materials so weit vorangeschritten, daß die Formbeständigkeit gewährleistet ist. Das Verbundteil kann nach dem Preßvorgang außerhalb des Preßwerkzeuges thermisch nachbehandelt werden und das duroplastische, vor allem aber das gummielastische Material vollständig vernetzen. Diese Nachbehandlung kann entweder in einem Heizschrank oder durch Bestrahlung, bevorzugt durch Infrarotbestrahlung, erfolgen.

Die erfindungsgemäß hergestellten Verbundteile bestehen aus zwei Komponenten, einer aus einem duroplastischen und einer aus einem gummielastischen Material.

Die duroplastische Komponente besteht aus einer Formmasse auf der Basis einer Reaktionsharzmasse. Wesentliche Komponente der Reaktionsharzmasse ist ein flüssiges oder verflüssigbares Harz, das für sich oder mit Reaktionsmitteln wie Härtern, Stabilisatoren oder Beschleunigern ohne Abspaltung flüchtiger Komponenten durch Polyaddition bzw. Polymerisation gehärtet werden kann.

Derartige Reaktionsharze sind:
Epoxidharze mit einer zur Härtung ausreichenden Anzahl von Epoxid-Gruppen,
Acrylat- oder Methacrylatharze bestehend aus einem Gemisch von polymeren und monomeren Acryl- oder Methacrylsäureestern,
ungesättigte Polyesterharze, gegebenenfalls im Gemisch mit damit copolymerisierbaren, monomeren, ungesättigten Verbindungen,
Isocyanatharze mit einer zur Härtung ausreichenden Anzahl von Isocyanat-Gruppen.

Die Reaktionsharzmasse enthält neben dem Reaktionsharz übliche Reaktionsmittel, Stabilisatoren und verstärkende Füllstoffe wie Ruß, Kreiden, Kaolin, Quarz oder Aluminiumoxid oder -oxidhydrat, bevorzugt aber unbehandelte oder mit Silanen geschlichtete Glasfasern.

Die Reaktionsmittel, z. B. Polyaminoamide, Säuren, Säureanhydride, Imidazole oder Imidazoline für Epoxidharze, organische Peroxide für ungesättigte Polyester-, Acrylat- oder Methacrylatharze oder blockierte Amine oder Polyole für Isocyanate werden so ausgewählt, daß sie eine bei Raumtemperatur möglichst lange lagerstabile, das heißt nicht härtende Masse ergeben, bei den Verpressungstemperaturen aber innerhalb der Preßzeiten eine möglichst vollständige Vernetzung und Härtung der Reaktionsharzmasse bedingen.

Die Reaktionsharzmassen stellen entweder rieselfähige Produkte oder zähplastische Massen dar. Sie können direkt als Formmassen eingesetzt werden. Bevorzugt aber werden die Formmassen als Halbzeuge eingesetzt, das heißt, die Reaktionsmassen werden in Form von Matten, Laminaten, Fellen oder extrudierten Teilen vorgefertigt.

Die bevorzugt eingesetzten Formmassen sind an sich bekannte, mit einem Reaktionsharz auf Basis ungesättigter Polyesterharze und entsprechenden Reaktionsmitteln imprägnierte Glasfasermatten, die unter der allgemeinen Bezeichnung SMC-Sheet im Handel sind.

Die gummielastische Masse ist eine Masse aus einem nicht vernetzten Kautschuk, Reaktionsmitteln, verstärkenden Füllstoffen, bvorzugt Ruß, und gegebenenfalls weiteren Additiven. Verwendbare Kautschuke sind alle mit Peroxiden oder mit Metalloxiden vernetzbaren Kautschuktypen wie z. B. Polybutadien-, Styrol-Butadien-, Acrylnitril-Butadien-, Ethylen-Propylen-, Polyisopren-, Acrylat-, Epoxid-, Polysulfid-, Urethan- oder Chlorbutyl-Kautschuk sowie Ethylen-Vinylacetat-Copolymere, chlorsulfoniertes Polyethylen oder Polychloropren.

Bevorzugt sind aufgrund der Öl- und Kraftstoffbeständigkeit Acrylnitril-Butadien- und Polysulfid-Kautschuke.

Reaktionsmittel sind ähnlich wie bei den Reaktionsharzmassen Härter oder Beschleuniger sowie übliche Stabilisatoren. Härter sind entweder organische oder anorganische Peroxide, Hydroperoxide oder Oxide zweiwertiger Metalle.

Zum Erzielen eines guten Verbundes der beiden unterschiedlichen Materialien ist es angebracht, den Härter so auszuwählen, daß die Vernetzung des Kautschuks unter den Preßbedingungen nicht schneller erfolgt als die Härtung des Reaktionsharzes. Die Vernetzung kann gleich schnell oder langsamer als die Härtung des Reaktionsharzes verlaufen. Im letzteren Fall muß die endgültige Vernetzung des Kautschuks durch nachträgliche thermische Behandlung des Verbundteils erfolgen.

Auch die Formmasse aus gummielastischem Material wird bevorzugt als Halbzeug, das heißt in Form eines vorgefertigten Fells oder extrudierten Profilteils eingesetzt. Durch eine Verformung, die der endgültigen Form im Verbundteil möglichst weitgehend angenähert ist, wird eine möglichst exakt reproduzierbare Fließfrontausbildung und damit eine genau einstellbare Grenzlinie zwischen den unterschiedlichen Materialien im Verbundteil erreicht und ebenso der Verlust beim Preßvorgang minimiert.

Eine weitere vorteilhafte Verfahrensvariante zur Herstellung der Verbundteile gemäß der Erfindung besteht darin, die Formmasse auf der Basis einer Reaktionsharzmasse in die geöffnete Form eines Stahlpreßwerkzeugs einzulegen, die Form zuzufahren, wobei in die noch nicht ganz geschlossene Form die Masse aus gummielastischem Material durch einen eventuell vorgeheizten Anspritzkanal eingespritzt wird, und danach das Verbundteil zu pressen.

Beispiel

A. Formmasse auf Basis einer Reaktionsharzmasse
Handelsübliches SMC-Sheet auf Basis eines ungesättigten Polyesters (Leguval ® W 20), Peroxid, Inhibitor, Magnesiumoxid, Ruß, Kreide, Glasfasern und organischem Peroxid.

B. Masse aus gummielastischem Material
Handelsübliche Kautschukmasse auf Basis eines Ethylen-Propylen-Kautschuks, Ruß, Zinkoxid, Stearinsäure und organischem Peroxid.
Die Masse ist als Rundprofilstrang vorgefertigt.

In die geöffnete Form eines auf 160 °C geheizten Stahlpreßwerkzeuges werden Zuschnitte der Formmasse gemäß A und der Masse gemäß B so eingelegt, daß die Bereiche des duroplastischen und des gummielastischen Formteils vorgegeben sind. Die Mengen der Massen sind geringfügig größer als es dem fertigen Verbundteil entspricht.
Die Form wird zugefahren und die Werkzeugteile 60 s lang mit einem Druck von 60 bar zusammengepreßt.
Danach wird die Form geöffnet und ein fertiges, 2 mm dickes Verbundteil entnommen, bei dem ein stabiler, hochfester Teil mit einem gummielastischen Teil fest verbunden sind.
Beim anschließenden Reißversuch reißt das Verbundteil im gummielastischen Teil bei einer Kraft von 9,5 N/mm².

**Patentansprüche**

1. Verfahren zur Herstellung von Verbundteilen, aus duroplastischem und gummielastischem Material durch Heiß-Verpressen, dadurch gekennzeichnet, daß eine Formmasse auf der Basis einer unvernetzten Reaktionsharzmasse mit einer Masse aus unvernetztem, gummielastischem Material in einem formgebenden Werkzeug in der Wärme in einem Arbeitsgang so verpreßt werden, daß sie während des Preßvorganges zusammenfließen und chemisch vernetzen.

2. Verfahren nach Anspruch 1, dadurch gekennzeichnet, daß die Verpressung bei einer Temperatur im Bereich von 120 bis 180°C erfolgt.

3. Verfahren nach den Ansprüchen 1 und 2, dadurch gekennzeichnet, daß die Verpressung mit einem Preßdruck im Bereich von 15 bis 100 bar erfolgt.

4. Verfahren nach den Ansprüchen 1 bis 3, dadurch gekennzeichnet, daß die Preßzeit 20 bis 30 s/mm beträgt.

5. Verfahren nach den Ansprüchen 1 bis 4, dadurch gekennzeichnet, daß die Verbundteile nach dem Preßvorgang thermisch nachbehandelt werden.

6. Verfahren nach den Ansprüchen 1 bis 5, dadurch gekennzeichnet, daß die Formmassen als Halbzeug vorliegen.

7. Verfahren nach den Ansprüchen 1 bis 6, dadurch gekennzeichnet, daß als Formmassen mit einem Reaktionsharz auf Basis ungesättigter Polyesterharze und entsprechenden Reaktionsmitteln imprägnierte Glasfasermatten verwendet werden.

8. Verfahren nach den Ansprüchen 1 bis 7, dadurch gekennzeichnet, daß als Masse aus gummielastischem Material eine Kautschukmasse auf Basis eines Kautschuks verwendet wird, der mit Peroxiden oder mit Metalloxiden vernetzt wird.

9. Verfahren nach den Ansprüchen 1 bis 8, dadurch gekennzeichnet, daß die Formmasse auf der Basis der Reaktionsharzmasse in die geöffnete Form des Werkzeugs eingebracht und die Form zugefahren wird, wobei in die noch nicht ganz geschlossene Form die Masse aus gummielastischem Material durch einen Anspritzkanal eingespritzt wird.

**Claims**

1. A method of manufacturing composite parts, of duroplastic and rubber-elastic material by hot-pressing, characterized in that a moulding material based on a non-cross-linked reaction material is pressed with a material of non-cross-linked rubber-elastic material is a shaping tool in the heat in an operating stage in such a way that during the pressing procedure they flow together and are cross-linked chemically.

2. A method according to Claim 1, characterized in that the pressing takes place at a temperature in the range of from 120 to 180°C.

3. A method according to Claims 1 and 2, characterized in that the pressing takes place with a pressure in the range of from 15 to 100 bar.

4. A method according to Claim 1 to 3, characterized in that the pressing time amounts to from 20 to 30 sec/mm.

5. A method according to Claims 1 to 4, characterized in that the composite parts have a thermal after-treatment after the pressing procedure.

6. A method according to Claims 1 to 5, characterized in that the moulding materials are present as semi-finished products.

7. A method according to Claims 1 to 6, characterized in that glass fibre mats impregnated with a reaction resin based on unsaturated polyester resins and appropriate reaction agents are used as moulding materials.

8. A method according to Claims 1 to 7, characterized in that a rubber mass based on a rubber, which is cross-linked with peroxides or with metal oxides, is used as the mass of rubber-elastic material.

9. A method according to Claims 1 to 8, characterized in that the moulding material based on the reaction resin material is introduced into the opened mould of the tool and the mould is closed, the mass of rubber-elastic material being injecting through an injection duct into the mould which is not yet quite closed.

**Revendications**

1. Procédé de fabrication de pièces composites en un matériau thermoplastique et un matériau à élasticité de caoutchouc par compression à chaud, caractérisé en ce qu'une masse de moulage à base d'une masse de résine de réaction non réticulée est comprimée à chaud en une seule opération dans un outil de formage avec une masse constituée par un matériau à élasticité de caoutchouc non réticulé, de telle manière que pendant l'opération de compression ces matériaux confluent et engendrent une réticulation chimique.

2. Procédé selon la revendication 1, caractérisé en ce que la compression s'effectue à une température dans le domaine de 120 à 180°C.

3. Procédé selon les revendications 1 et 2, caractérisé en ce que la compression s'effectue à une pression dans le domaine de 15 à 100 bars.

4. Procédé selon les revendications 1 à 3, caractérisé en ce que la durée de compression est de 20 à 30 s/mm.

5. Procédé selon les revendications 1 à 4, caractérisé en ce que les pièces composites sont soumises à un posttraitement thermique après l'opération de compression.

6. Procédé selon les revendications 1 à 5, caractérisé en ce que les masses de moulage se présentent sous forme de produits semi-finis.

7. Procédé selon les revendications 1 à 6, caractérisé en ce qu'on utilise en tant que masses de moulage des mats de fibres de verre imprégnés d'une résine de réaction à base de résines de polyesters insaturés et d'agents de réaction correspondants.

8. Procédé selon les revendications 1 à 7, caractérisé en ce qu'on utilise en tant que masses à base de matériau à élasticité de caoutchouc une masse de caoutchouc à base d'un caoutchouc qui est réticulé à l'aide de peroxydes ou d'oxydes métalliques.

9. Procédé selon les revendications 1 à 8, caractérisé en ce que la masse de moulage à base de la résine de réaction est introduite dans le moule ouvert de l'outil et que le moule est fermé, la masse constituée par le matériau à élasticité de caoutchouc étant injectée dans le moule non encore entièrement fermé à travers un canal d'injection.